# EUROPÄISCHE PATENTSCHRIFT

(11) **EP 0 318 857 B1**
(45) Veröffentlichungstag und Bekanntmachung des Hinweises auf die Patenterteilung: **07.01.1993**
(21) Anmeldenummer: 88119660.4
(22) Anmeldetag: 25.11.1988
(51) Int. Cl.: B60K 28/16

(54) **Regeleinrichtung zur Regelung des Antriebsmomentes einer Brennkraftmaschine eines Kraftfahrzeuges**
System for controlling the torque of the internal combustion engine of an automotive vehicle
Dispositif de réglage du moment du moteur à combustion interne d'un véhicule automobile

(30) Priorität: 28.11.1987 DE 3740433
(43) Veröffentlichungstag der Anmeldung: 07.06.1989
(73) Patentinhaber: Bayerische Motoren Werke Aktiengesellschaft, 80788 München (DE)
(72) Erfinder: Krusche, Heinz, D-8904 Friedberg (DE)

(56) Entgegenhaltungen:
- DE-A- 3 545 652
- DE-A- 3 545 717
- US-A- 4 582 159
- US-A- 4 615 410
- PATENT ABSTRACTS OF JAPAN, Band 9, Nr. 249 (M-419)(2036), 10. Dezember 1985
- PATENT ABSTRACTS OF JAPAN, Band 9, Nr. 313 (M-437)(2036), 10. Dezember 1985
- PATENT ABSTRACTS OF JAPAN, Band 10, Nr. 286 (M-521)(2342), 27. September 1986

## Beschreibung

Die Erfindung betrifft eine Regeleinrichtung zur Regelung des Antriebsdrehmomentes der Brennkraftmaschine eines Kraftfahrzeuges nach dem Oberbegriff des Patentanspruchs 1.

Um eine bestimmte Seitenführungskraft zwischen den Antriebsrädern eines Kraftfahrzeuges und der Fahrbahn übertragen zu können, ist bei einem hohen Kraftschlußbeiwert ein deutlich größerer Radschlupf erlaubt als bei einem niedrigen Kraftschlußbeiwert. Zur Gewährleistung einer hinreichend großen Seitenführungskraft zwischen den Antriebsrädern eines Kraftfahrzeuges und der Fahrbahn auch bei einem niedrigen Kraftschlußbeiwert muß die Schlupfschwelle daher auf den niedrigen Kraftschlußbeiwert ausgelegt werden. Dies hat den Nachteil, daß bei hohem Kraftschlußbeiwert, bei dem ein größerer Radschlupf zulässig wäre, potentielles Beschleunigungsvermögen des Kraftfahrzeuges nicht genutzt werden kann.

Aus der DE-A-35 45 652 ist bereits eine Einrichtung zur Vortriebsregelung bei Kraftfahrzeugen bekannt, bei der in Abhängigkeit eines die Längsbeschleunigung des Kraftfahrzeuges wiedergebenden Signals jeweils eine von drei unterschliedlichen Schlupfschwellen wirksam geschaltet werden kann. Da bei dieser bekannten Einrichtung nur drei unterschiedliche Schlupfschwellen vorgesehen sind, ist eine Anpassung der Schlupfschwelle an die verschiedenen Kraftschlußbeiwerte nur unzureichend möglich. Da ferner bei der bekannten Einrichtung die Wirksamschaltung einer der drei unterschiedlichen Schlupfschwellen in Abhängigkeit eines die Längsbeschleunigung des Kraftfahrzeuges angebenden Signales erfolgt, wird die gewünschte Anpassung der Schlupfschwelle an den jeweils zwischen den Antriebsrädern des Kraftfahrzeuges und der Fahrbahn wirksamen Kraftschlußbeiwert auch ohne diesem Grunde nur unzureichend erreicht. Dies ist darauf zurückzuführen, daß die gemessene Längsbeschleunigung des Kraftfahrzeuges nur in sehr grober Relation zu dem zwischen den Antriebsrädern des Kraftfahrzeuges und der Fahrbahn wirksamen Kraftschlußbeiwert steht, da die Längsbeschleunigung des Kraftfahrzeuges außer vom Kraftschlußbeiwert auch noch vom Gierwinkel des Kraftfahrzeuges einerseits und von der Beladung des Kraftfahrzeuges andererseits abhängt. Schließlich ist die bekannte Einrichtung fertigungstechnisch aufwendig und damit teuer zu realisieren, da zumindest ein separater Längsbeschleunigungssensor erforderlich ist. Soll darüber hinaus zur Verbesserung der Regelqualität die nur sehr grobe Relation der gemessenen Längsbeschleunigung des Kraftfahrzeuges zu dem zwischen den Antriebsrädern des Kraftfahrzeuges und der Fahrbahn wirksamen Kraftschlußbeiwert verbessert werden, so müssen zusätzlich der Lenkwinkel mit Hilfe eines separaten Lenkwinkelsensors und die Beladung des Kraftfahrzeuges mit Hilfe eines zusätzlichen Beladungssensors gemessen bzw. ermittelt werden. Selbst bei Verwendung eines Längsbeschleunigungssensors, eines Lenkwinkelsensors und eines Beladungssensors gibt ein mit Hilfe dieser Sensoren ermitteltes Hilfssignal Änderungen des Kraftschlußbeiwertes zwischen den Antriebsrädern des Kraftfahrzeuges und der Fahrbahn nur verzögert wieder, da sich bei einer abrupten Änderung des Kraftschlußbeiwertes zwischen den Antriebsrädern des Kraftfahrzeuges und der Fahrbahn die Längsbeschleunigung des Kraftfahrzeuges aufgrund dessen Massenträgheit nur mit zeitlicher Verzögerung ändert.

Es ist ferner aus der JP-A 60-99757 eine Regeleinrichtung zur Regelung des Antriebsdrehmomentes der Brennkraftmaschine eines Kraftfahrzeuges bekannt, bei der an den Antriebsrädern des Kraftfahrzeuges auftretender Radschlupf der Größe nach erfaßt wird und bei der bei Überschreiten einer Schlupfschwelle durch ein die Größe des Radschlupfes eines Antriebsrades angebendes Radschlupfsignal das Antriebsdrehmoment der Brennkraftmaschine verringert wird. Bei dieser bekannten Regeleinrichtung wird ferner der in Radumfangsrichtung jeweils wirksame Kraftschlußbeiwert als Maß für die Fahrbahnbeschaffenheit aufgrund der ermittelten Beschleunigung eines nichtangetriebenen Rades geschätzt und wird die für die Antriebsräder maßgebliche Schlupfschwelle in Abhängigkeit von dem jeweils geschätzten in Radumfangsrichtung wirksamen Kraftschlußbeiwert verändert.

Ein Nachteil dieser bekannten Regeleinrichtung besteht darin, daß der in Radumfangsrichtung jeweils wirksame Kraftschlußbeiwert nur lediglich aufgrund der ermittelten Beschleunigung eines nichtangetriebenen Rades grob geschätzt und nicht genau ermittelt wird. Bei einer nur sehr ungenauen Schätzung des in Radumfangsrichtung jeweils wirksamen Kraftschlußbeiwertes als Maß für die Fahrbahnbeschaffenheit kann folglich damit auch die für die Antriebsräder maßgebliche Schlupfschwelle nur sehr ungenau in Abhängigkeit von dem jeweils geschätzten Kraftschlußbeiwert verändert und damit an die jeweilige Fahrbahnbeschaffenheit angepaßt werden, was sich auf die Fahrstabilität und den Vortrieb des Fahrzeuges negativ auswirkt.

Es ist daher Aufgabe der Erfindung, eine Regeleinrichtung eingangs genannter Art anzugeben, durch die aufgrund einer sehr genauen Bestimmung des jeweils in Radumfangsrichtung wirksamen Kraftschlußbeiwertes eine optimale Anpassung der für die Antriebsräder maßgeblichen Schlupfschwelle an die jeweilige Fahrbahnbeschaffenheit und damit ein Optimum im Hinblick auf Fahrstabilität und Vortrieb des Kraftfahrzeuges erreicht wird.

Da der in Radumfangsrichtung wirksame Kraftschlußbeiwert in sehr genauer Relation zum insgesamt zwischen den Antriebsrädern des Kraftfahrzeuges und der Fahrbahn wirksamen Kraftschlußbeiwert steht, wird durch die Veränderung der für die Antriebsräder maßgeblichen Schlupfschwelle in Abhängigkeit von dem jeweils ermittelten in Radumfangsrichtung wirksamen Kraftschlußbeiwert eine sehr exakte und dynamisch verzögerungsfreie Anpassung der Schlupfschwelle an den insgesamt zwischen den Antriebsrädern des Kraftfahrzeuges und der Fahrbahn wirksamen Kraftschlußbeiwert erreicht. Durch diese Anpassung der Schlupfschwelle an den jeweiligen zwischen den Antriebsrädern des Kraftfahrzeuges und der Fahrbahn wirksamen Kraftschlußbeiwert wird einerseits bei einem niedrigen Kraftschlußbeiwert aufgrund einer entsprechend kleinen Schlupfschwelle eine hinreichend große Seitenführungskraft der Antriebsräder des Kraftfahrzeuges und andererseits bei einem hohen zwischen den Antriebsrädern des Kraftfahrzeuges und der Fahrbahn wirksamen Kraftschlußbeiwert aufgrund der dann entsprechend großen Schlupfschwelle ein ausgezeichneter Vortrieb des Kraftfahrzeuges unter Beibehaltung einer hinreichend großen Seitenführungskraft der Antriebsräder erzielt. Voraussetzung dafür ist jedoch, daß der in Radumfangsrichtung jeweils wirksame Kraftschlußbeiwert sehr genau bestimmt wird, weil nur auf der Grundlage eines sehr genau bestimmten Kraftschlußbeiwertes eine gute Anpassung der für die Antriebsräder maßgeblichen Schlupfschwelle an die jeweilige Fahrbahnbeschaffenheit erfolgen kann. Zur genauen Bestimmung des jeweils wirksamen Kraftschlußbeiwertes wird bei der erfindungsgemäßen Regeleinrichtung die jeweilige Kraftschlußbeanspruchung, d. h. die auf die jeweilige Radlast bezogene von einem Antriebsrad auf die Fahrbahn übertragene Randumfangskraft als Funktion des erfaßten Radschlupfes, d. h. die jeweilige Kraftschlußbeanspruchung-Radschlupf-Kennlinie bestimmt und wird zur Ermittlung des in Radumfangsrichtung jeweils wirksamen Kraftschlußbeiwertes zumindest annähernd das Maximum dieser Kraftschlußbeanspruchung-Radschlupf-Kennlinie bestimmt. Dabei wird die zur Bestimmung der jeweiligen Kraftschlußbeanspruchung erforderliche jeweilige Radumfangskraft aufgrund des Antriebsdrehmomentes der Brennkraftmaschine, der Getriebeübersetzung, der Anzahl der Antriebsräder und deren Radius errechnet. Durch die erfindungsgemäße Regeleinrichtung wird aufgrund der sehr genauen Bestimmung des in Radumfangsrichtung jeweils wirksamen Kraftschlußbeiwertes und der dadurch möglichen sehr guten Anpassung der für die Antriebsräder maßgeblichen Schlupfschwelle an die jeweilige Fahrbahnbeschaffenheit bei den verschiedensten Kraftschlußbeiwerten jeweils ein Optimum im Hinblick auf Fahrstabilität und Vortrieb erreicht.

Zur Ermittlung des Kraftschlußbeiwertes der Fahrbahnseite mit der schlechteren Fahrbahnbeschaffenheit und damit zur Berücksichtigung des Traktionsverhaltens des kritischeren Antriebsrades wird die KraftschlußbeanspruchungRadschlupf-Kennlinie jeweils für das Antriebsrad bestimmt, bei dem der größte Radschlupf auftritt. Vorzugsweise erfolgt die zumindest annähernde Bestimmung des Maximums der jeweiligen Kraftschlußbeanspruchung-Radschlupf-Kennlinie durch Feststellen eines charakteristischen Abfalls der Kennliniensteigung. Auf diese Weise kann das Maximum der jeweiligen Kraftschlußbeanspruchung-Radschlupf-Kenn linie, also der in Radumfangsrichtung wirksame Kraftschlußbeiwert sehr schnell ermittelt werden, so daß der gewünschte Kraftschlußbeiwert jeweils verzögerungsfrei zur Verfügung steht. Dies trägt wesentlich zu einer dynamisch schnellen und damit sehr exakten Regelung des Antriebsdrehmomentes der Brennkraftmaschine eines Kraftfahrzeuges bei.

Nach einer vorteilhaften Ausgestaltung der Erfindung wird das Antriebsdrehmoment der Brennkraftmaschine des Kraftfahrzeuges in einfacher Weise aufgrund der Stellung des Leistungsstellgliedes, beispielsweise der Drosselklappe und der Drehzahl der Brennkraftmaschine ermittelt.

Dazu wird vorteilhaft auf ein abgespeichertes, das Antriebsdrehmoment der Brennkraftmaschine in Abhängigkeit von der Stellung des Leistungsstellgliedes und von der Drehzahl der Brennkraftmaschine wiedergebendes Kennlinienfeld zugegriffen.

Der zur Ermittlung des in Radumfangsrichtung wirksamen Kraftschlußbeiwertes neben der Kraftschlußbeanspruchung erforderliche Radschlupf wird nach einer vorteilhaften Weiterbildung der Erfindung durch Vergleich der Drehzahl des Antriebsrades mit der Drehzahl des nichtangetriebenen Rades einer Fahrzeugseite erfaßt.

Die genaue Ermittlung des Radschlupfes erfolgt dabei durch Subtraktion der Drehzahl des nichtangetriebenen Rades von der Drehzahl des Antriebsrades und durch anschließende Division des Subtraktionsergebnisses durch die Drehzahl des nichtangetriebenen Rades.

Alternativ dazu kann der Radschlupf durch Subtraktion der Kraftfahrzeuggeschwindigkeit von der Radumfangsgeschwindigkeit eines Antriebsrades und durch anschließende Division des Subtraktionsergebnisses durch die Kraftfahrzeuggeschwindigkeit bestimmt werden.

Zur feineren Anpassung der Schlupfschwelle an den jeweiligen zwischen den Antriebsrädern des Kraftfahrzeuges und der Fahrbahn wirksamen Kraftschlußbeiwert wird die Schlupfschwelle nach einer Weiterbildung der Erfindung in Abhängigkeit von dem jeweils ermittelten in Radumfangsrichtung wirksamen Kraftschlußbeiwert kontinuierlich verändert.

Vorzugsweise wird dabei die Schlupfschwelle proportional zum jeweils ermittelten in Radumfangsrichtung wirksamen Kraftschlußbeiwert verändert.

Nach einer weiteren Ausbildung der Erfindung wird die Geschwindigkeit der bei einem Regeleingriff erfolgenden Antriebsdrehmomentverringerung bzw. der nachfolgenden Antriebsdrehmomentanhebung in Abhängigkeit von dem jeweils ermittelten in Radumfangsrichtung wirksamen Kraftschlußbeiwert verändert. Es wird dadurch erreicht, daß bei kleinem zwischen den Antriebsrädern des Kraftfahrzeuges und der Fahrbahn wirksamen Kraftschlußbeiwert eine langsame Antriebsdrehmomentverringerung bzw. eine nachfolgende langsame Antriebsdrehmomentanhebung erfolgt, wodurch die Antriebsräder des Kraftfahrzeuges mit geringem Drehmomentüberschuß an ihre Schlupfgrenze herangeführt werden. Bei einem großen zwischen den Antriebsrädern des Kraftfahrzeuges und der Fahrbahn wirksamen Kraftschlußbeiwert kann die Geschwindigkeit der Antriebsdrehmomentänderung erheblich größer sein, da in diesem Falle auch bei einer sehr leistungsstarken Brennkraftmaschine des Kraftfahrzeuges das Überschußantriebsdrehmoment nicht zu groß ist. Die Änderung der Geschwindigkeit der Antriebsdrehmomentänderung in Abhängigkeit vom jeweils wirksamen Kraftschlußbeiwert bringt insbesondere bei einer inhomogenen Fahrbahn Vorteile im Hinblick auf eine optimale Fahrstabilität bei bestem Vortrieb.

Nach einer weiteren Ausbildung der Erfindung wird die Geschwindigkeit der bei einem Regeleingriff erfolgenden Antriebsdrehmomentverringerung bzw. -anhebung in Abhängigkeit von dem jeweils ermittelten in Radumfangsrichtung wirksamen Kraftschlußbeiwert kontinuierlich verändert. Durch diese kontinuierliche Veränderung wird eine sehr gute Anpassung der jeweiligen Antriebsdrehmomentänderungsgeschwindigkeit an den jeweiligen zwischen den Antriebsrädern des Kraftfahrzeuges und der Fahrbahn wirksamen Kraftschlußbeiwert erreicht.

Vorzugsweise wird dabei die Geschwindigkeit der bei einem Regeleingriff erfolgenden Antriebsdrehmomentverringerung bzw. -anhebung proportional zum jeweils ermittelten in Radumfangsrichtung wirksamen Kraftschlußbeiwert verändert.

Im folgenden wird die Erfindung anhand eines Ausführungsbeispiels näher erläutert. Es zeigen:
- Fig. 1: ein Blockschaltbild einer mit der erfindungsgemäßen Regeleinrichtung ausgerüsteten Antriebsanordnung eines Kraftfahrzeuges und
- Fig. 2: das Kraftschlußbeanspruchung-Radschlupf-Diagramm von Fig. 1 in vergrößerter Darstellung.

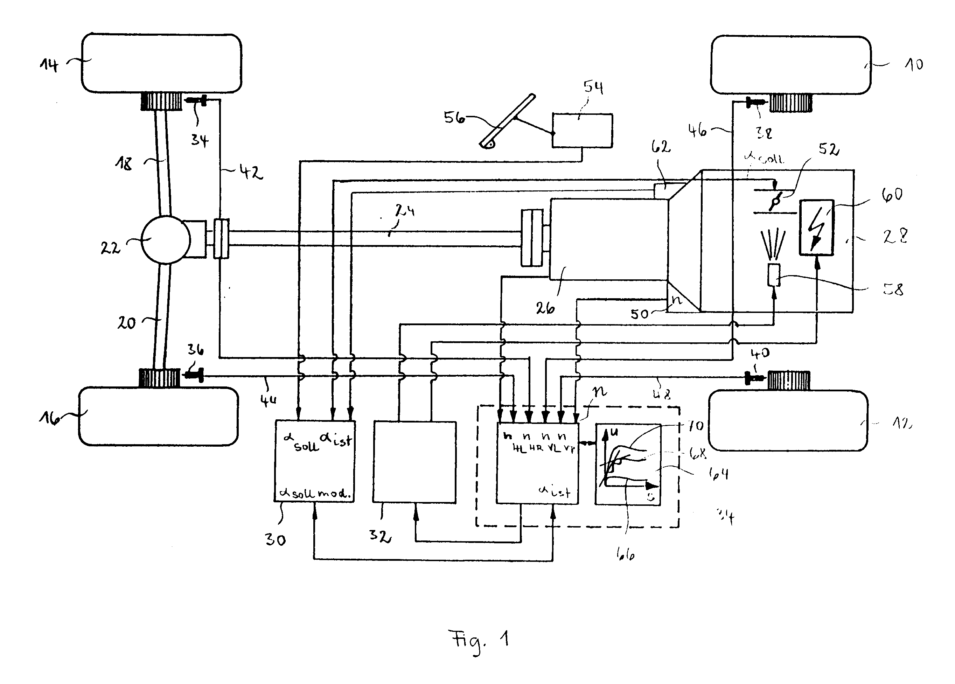

Die in Fig. 1 dargestellte Antriebsanordnung eines Kraftfahrzeuges besteht im wesentlichen aus den nichtangetriebenen Vorderrädern 10 und 12 sowie den Antriebsrädern 14 und 16, die über Abtriebswellen 18 und 20, ein Achsausgleichsgetriebe 22, eine Kardanwelle 24 und ein Geschwindigkeitswechselgetriebe 26 von einer Brennkraftmaschine 28 angetrieben werden. Diese in der Figur dargestellte Antriebsanordnung ist zur Regelung des Antriebsdrehmomentes der Brennkraftmaschine 28 mit einer elektronischen Drosselklappenregeleinheit 30, einer elektronischen Brennkraftmaschinensteuereinheit 32 sowie einer in der Figur gestrichelt eingezeichneten Kraftschlußbeiwertermittlungseinheit 34 ausgerüstet. Letztere ist mit Radsensoren 34, 36, 38 und 40 über elektrische Zuleitungen 42, 44, 46 und 48 verbunden, über die die die erfaßten Raddrehzahlen n_{HL}, n_{HR}, n_{VL} und n_{VR} angebenden Ausgangssignale der Radsensoren 34, 36, 38 und 40 zur Kraftschlußbeiwertermittlungseinheit 34 übertragen werden. Diese erhält als Eingangssignale vom Geschwindigkeitswechselgetriebe 26 ferner ein die jeweilige Getriebeübersetzung angebendes Signal, die von einem Drehzahlaufnehmer 50 erfaßte Brennkraftmaschinendrehzahl n sowie den jeweiligen Drosselklappenstellungsistwert αᵢₛₜ , der von einem am in der Figur nicht dargestellten Stellmotor der Drosselklappe 52 angeordneten in der Figur ebenfalls nicht dargestellten ersten Potentiometer erfaßt und über die elektronische Drosselklappenregeleinheit 30 zur Kraftschlußbeiwertermittlungseinheit 34 übertragen wird. Die elektronische Drosselklappenregeleinheit 30 erhält als weiteres Eingangssignal den vom Fahrer gewünschten Drosselklappenstellungssollwert αₛₒₗₗ , der mit Hilfe eines Fahrpedal-Stellungsgebers 54 in Form eines zweiten Potentiometers erfaßt wird und die vom Fahrer gewünschte Stellung des Fahrpedals 56 angibt. Die elektronische Drosselklappenregeleinheit 30 erhält von der Kraftschlußbeiwertermittlungseinheit 34 bei auftretendem Radschlupf an den Antriebsrädern 14 und 16 ferner ein Signal, das einen modifizierten Drosselklappenstellungssollwert α_{sollmod.} angibt. Die Kraftschlußbeiwertermittlungseinheit 34 gibt bei auftretendem Radschlupf an den Antriebsrädern 14 und 16 ein weiteres Ausgangssignal an die elektronische Brennkraftmaschinensteuereinheit 32 ab, durch das diese in einem ersten Regelschritt derart gesteuert wird, daß zur dynamisch schnellen Reduzierung des Antriebsdrehmomentes der Brennkraftmaschine 28 stufen- und/oder zeitweise deren Kraftstoffzumeßeinrichtung 58 und/oder deren Zündeinrichtung 60 für einzelne Zylindereinheiten in Abhängigkeit von der Größe des erfaßten Radschlupfes an den Antriebsrädern 14 und 16 abgeschaltet werden/wird. Erst in einem zweiten Regelschritt, insbesondere zur Verringerung des durch den ersten Regelschritt bedingten zu großen Luftanteils im Abgas der Brennkraftmaschine 28, wird der dieser zuzuführende Luftstrom in Abhängigkeit von der Größe des Radschlupfes und der Größe des Ausgangssignals einer Sauerstoffsonde 62 im Abgaskanal der Brennkraftmaschine 28 verringert. In der Kraftschlußbeiwertermittlungseinheit 34 erfolgt die Ermittlung des in Radumfangsrichtung wirksamen Kraftschlußbeiwertes durch eine im folgenden noch näher zu erläuternde Auswertung der jeweils bestimmten, in der Figur im Kraftschlußbeanspruchung-Radschlupf-Diagramm 64 dargestellten Kraftschlußbeanspruchung-Radschlupf-Kennlinie.

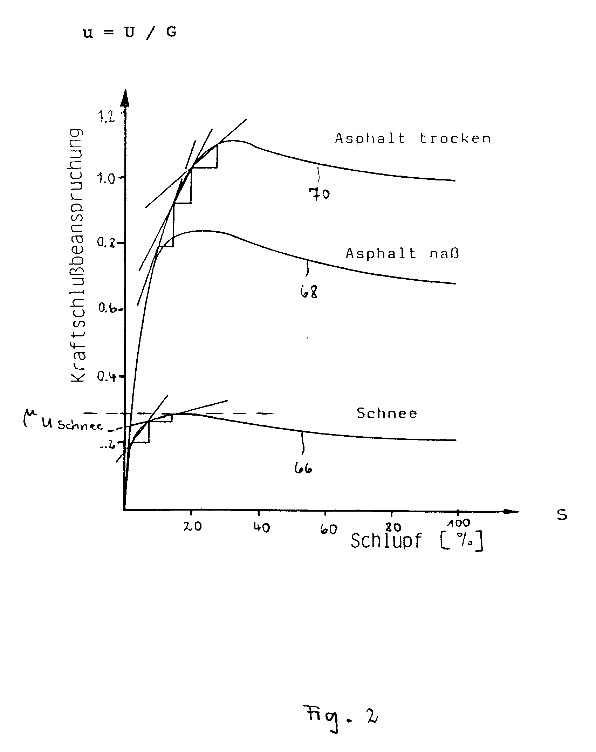

Nachdem vorstehend im wesentlichen der Aufbau der mit der erfindungsgemäßen Regeleinrichtung zur Regelung des Antriebsdrehmomentes der Brennkraftmaschine eines Kraftfahrzeuges ausgerüsteten Antriebsanordnung erläutert wurde, soll im folgenden noch die Funktion der erfindungsgemäßen Regeleinrichtung anhand der Figuren 1 und 2 näher erläutert werden.

Bei der erfindungsgemäßen Regeleinrichtung zur Regelung des Antriebsdrehmomentes der Brennkraftmaschine 28 eines Kraftfahrzeuges wird die jeweilige Kraftschlußbeanspruchung u, d. h. die auf die jeweilige Radlast G bezogene von einem Antriebsrad 14 oder 16 auf die Fahrbahn übertragene Radumfangskraft U als Funktion des erfaßten Radschlupfes s, d. h. die jeweilige Kraftschlußbeanspruchung-Radschlupf-Kennlinie 66, 68, 70 (siehe insbesondere Fig. 2) für das Antriebsrad 14 oder 16 bestimmt, bei dem der größte Radschlupf s auftritt, und wird zur Ermittlung des in Radumfangsrichtung jeweils wirksamen Kraftschlußbeiwertes µ_{U} zumindest annähernd das Maximum dieser Kraftschlußbeanspruchung-Radschlupf-Kennlinie 66, 68 oder 70 bestimmt. Dabei wird die zur Bestimmung der jeweiligen Kraftschlußbeanspruchung u erforderliche jeweilige Radumfangskraft U aufgrund des Antriebsdrehmomentes der Brennkraftmaschine 28, der Getriebeübersetzung, der Anzahl der Antriebsräder 14, 16 und deren Radius errechnet. Das Antriebsdrehmoment der Brennkraftmaschine 28 kann dabei in einfacher Weise aufgrund der Stellung αᵢₛₜ der Drosselklappe 52 und der Drehzahl n der Brennkraftmaschine 28 ermittelt werden. Vorzugsweise wird dazu auf ein abgespeichertes, das Antriebsdrehmoment der Brennkraftmaschine 28 in Abhängigkeit von der Stellung αᵢₛₜ der Drosselklappe 52 und der Drehzahl n der Brennkraftmaschine 28 wiedergebendes, in den Figuren nicht dargestelltes Kennlinienfeld zugegriffen.

Der ferner zur Bestimmung der jeweiligen Kraftschlußbeanspruchung-Radschlupf-Kennlinie 66, 68 oder 70 erforderliche jeweilige Radschlupf s wird wie beim dargestellten Ausführungsbeispiel vorzugsweise durch Subtraktion der Drehzahl n_{VL} oder n_{VR} des nichtangetriebenen Rades 10 oder 12 von der Drehzahl n_{HL} oder n_{HR} des Antriebsrades 14 oder 16 einer Kraftfahrzeugseite und durch anschließende Division des Subtraktionsergebnisses durch die Drehzahl n_{VL} oder n_{VR} des nichtangetriebenen Rades 10 oder 12 bestimmt.

Alternativ dazu könnte der Radschlupf s auch durch Subtraktion der beispielsweise mit Hilfe einer Radarmeßeinrichtung ermittelten Kraftfahrzeuggeschwindigkeit von der Radumfangsgeschwindigkeit eines Antriebsrades 14 oder 16 und durch anschließende Division des Subtraktionsergebnisses durch die Kraftfahrzeuggeschwindigkeit bestimmt werden.

Trägt man die jeweils in Abhängigkeit vom erfaßten Radschlupf s ermittelte Kraftschlußbeanspruchung u in Form einer funktionalen Beziehung auf, so erhält man die jeweilige Kraftschlußbeanspruchung-Radschlupf-Kennlinie 66, 68 oder 70 (siehe insbesondere Fig. 2). Anhand dieser, beispielsweise der Kraftschlußbeanspruchung-Radschlupf-Kennlinie 66, kann durch zumindest annähernde Bestimmung ihres Maximums der jeweilige in Radumfangsrichtung wirksame Kraftschlußbeiwert µ_{U} zwischen einem Antriebsrad 14 oder 16 und einer hier beispielsweise schneebedeckten Fahrbahn bestimmt werden. In Abhängigkeit von dem jeweils ermittelten in Radumfangsrichtung wirksamen Kraftschlußbeiwert µ_{U} wird dann die für die Antriebsräder 14 und 16 maßgebliche Schlupfschwelle verändert. Beim dargestellten Ausführungsbeispiel der Erfindung wird die Schlupfschwelle proportional zum jeweils ermittelten in Radumfangsrichtung wirksamen Kraftschlußbeiwert µ_{U} verändert. Neben der Anpassung der Schlupfschwelle an den jeweils ermittelten in Radumfangsrichtung wirksamen Kraftschlußbeiwert µ_{U} und damit auch an den insgesamt zwischen den Antriebsrädern 14 und 16 und der Fahrbahn wirksamen Kraftschlußbeiwert µ wird ferner die Geschwindigkeit der bei einem Regeleingriff erfolgenden Antriebsdrehmomentverringerung bzw. der nachfolgenden Antriebsdrehmomentanhebung in Abhängigkeit von dem jeweils ermittelten in Radumfangsrichtung wirksamen Kraftschlußbeiwert µ_{U} verändert. Diese Veränderung der Geschwindigkeit der bei einem Regeleingriff erfolgenden Angriffsdrehmomentverringerung bzw. -anhebung erfolgt dabei vorzugsweise proportional zum jeweils ermittelten in Radumfangsrichtung wirksamen Kraftschlußbeiwert µ_{U}. Durch diese Veränderung der Geschwindigkeit der bei einem Regeleingriff erfolgenden Antriebsdrehmomentverringerung bzw. -anhebung in Abhängigkeit vom jeweiligen zwischen den Antriebsrädern 14 und 16 wirksamen Kraftschlußbeiwert µ wird erreicht, daß bei einem kleinen Kraftschlußbeiwert µ der Antriebsdrehmomentabfall bzw. -anstieg nach einem Regeleingriff langsam erfolgt, damit das geregelte Antriebsrad mit geringem Antriebsdrehmomentüberschuß wieder an seine Schlupfgrenze herangeführt wird, während bei einem hohen Kraftschlußbeiwert µ diese Veränderungsgeschwindigkeit erheblich größer sein kann, da in diesem Falle auch bei starken Brennkraftmaschinen das Überschußantriebsdrehmoment nicht zu groß ist. Diese Art der Regelung des Antriebsdrehmomentes der Brennkraftmaschine 28 eines Kraftfahrzeuges gewährleistet insbesondere bei inhomogenen Fahrbahnen ein Optimum im Hinblick auf Fahrstabilität und Vortrieb eines mit der erfindungsgemäßen Regeleinrichtung ausgerüsteten Kraftfahrzeuges.

## Patentansprüche

1. Regeleinrichtung zur Regelung des Antriebsdrehmomentes der Brennkraftmaschine eines Kraftfahrzeuges, bei der an den Antriebsrädern des Kraftfahrzeuges auftretender Radschlupf der Größe nach erfaßt wird, bei der bei Überschreiten einer Schlupfschwelle durch ein die Größe des Radschlupfes eines Antriebesrades angebendes Radschlupfsignal das Antriebsdrehmoment der Brennkraftmaschine verringert wird, bei der der in Radumfangsrichtung jeweils wirksame Kraftschlußbeiwert (µ_{U}) als Maß für die Fahrbahnbeschaffenheit ermittelt wird und bei der die für die Antriebsräder (14, 16) maßgebliche Schlupfschwelle in Abhängigkeit von dem jeweils ermittelten in Radumfangsrichtung wirksamen Kraftschlußbeiwert (µ_{U}) verändert wird,
dadurch gekennzeichnet, daß die jeweilige Kraftschlußbeanspruchung (u), d. h. die auf die jeweilige Radlast (G) bezogene von einem Antriebsrad (14 oder 16) auf die Fahrbahn übertragene Radumfangskraft (U) als Funktion des erfaßten Radschlupfes (s), d. h. die jeweilige Kraftschlußbeanspruchung-Radschlupf-Kennlinie (66, 68 und 70) bestimmt wird, wobei die zur Bestimmung der jeweiligen Kraftschlußbeanspruchung (u) erforderliche jeweilige Radumfangskraft (U) aufgrund des Antriebsdrehmomentes der Brennkraftmaschine (28), der Getriebeübersetzung, der Anzahl der Antriebsräder (14, 16) und deren Radius errechnet wird, und daß zur Ermittlung des in Radumfangsrichtung jeweils wirksamen Kraftschlußbeiwertes (µ_{U}) zumindest annähernd das Maximum dieser Kraftschlußbeanspruchung-Radschlupf-Kennlinie (66, 68 oder 70) bestimmt wird.

2. Regeleinrichtung nach Anspruch 1,
dadurch gekennzeichnet, daß die Kraftschlußbeanspruchung-Radschlupf-Kennlinie (66, 68 oder 70) jeweils für das Antriebsrad (14 oder 16) bestimmt wird, bei dem der größte Radschlupf (s) auftritt.

3. Regeleinrichtung nach Anspruch 1 oder 2,
dadurch gekennzeichnet, daß die zumindest annähernde Bestimmung des Maximums der jeweiligen Kraftschlußbeanspruchung-Radschlupf-Kennlinie (66, 68 oder 70) durch Feststellen eines charakteristischen Abfalls der Kennliniensteigung erfolgt.

4. Regeleinrichtung nach Anspruch 3,
dadurch gekennzeichnet, daß das Antriebsdrehmoment der Brennkraftmaschine (28) aufgrund der Stellung des Leistungsstellgliedes, beispielsweise der Drosselklappe (52), und der Drehzahl (n) der Brennkraftmaschine (28) ermittelt wird.

5. Regeleinrichtung nach Anspruch 4,
dadurch gekennzeichnet, daß das Antriebsdrehmoment der Brennkraftmaschine (28) unter Zugriff auf ein abgespeichertes, das Antriebsdrehmoment der Brennkraftmaschine (28) in Abhängigkeit von der Stellung des Leistungsstellgliedes (52) und der Drehzahl (n) der Brennkraftmaschine (28) wiedergebendes Kennlinienfeld ermittelt wird.

6. Regeleinrichtung nach einem der vorhergehenden Ansprüche,
dadurch gekennzeichnet, daß der Radschlupf (s) durch Vergleich der Drehzahl des Antriebsrades (14 bzw. 16) mit der Drehzahl des nichtangetriebenen Rades (10 bzw. 12) einer Fahrzeugseite erfaßt wird.

7. Regeleinrichtung nach Anspruch 6,
dadurch gekennzeichnet, daß der Radschlupf (s) durch Subtraktion der Drehzahl (n_{VL} bzw. n_{VR}) des nichtangetriebenen Rades (10 bzw. 12) von der Drehzahl (n_{HL} bzw. n_{HR}) des Antriebsrades (14 bzw. 16) und durch anschließende Division des Subtraktionsergebnisses durch die Drehzahl (n_{VL} bzw. n_{VR}) des nichtangetriebenen Rades (10 bzw. 12) bestimmt wird.

8. Regeleinrichtung nach einem der vorhergehenden Ansprüche,
dadurch gekennzeichnet, daß der Radschlupf (s) durch Subtraktion der Fahrzeuggeschwindigkeit von der Radumfangsgeschwindigkeit eines Antriebsrades (14 bzw. 16) und durch anschließende Division des Subtraktionsergebnisses durch die Kraftfahrzeuggeschwindigkeit bestimmt wird.

9. Regeleinrichtung nach einem der vorhergehenden Ansprüche,
dadurch gekennzeichnet, daß die Schlupfschwelle in Abhängigkeit von dem jeweils ermittelten in Radumfangsrichtung wirksamen Kraftschlußbeiwert (µ_{U}) kontinuierlich verändert wird.

10. Regeleinrichtung nach Anspruch 9,
dadurch gekennzeichnet, daß die Schlupfschwelle proportional zum jeweils ermittelten in Radumfangsrichtung wirksamen Kraftschlußbeiwert (µ_{U}) verändert wird.

11. Regeleinrichtung nach einem der vorhergehenden Ansprüche,
dadurch gekennzeichnet, daß die Geschwindigkeit der bei einem Regeleingriff erfolgenden Antriebsdrehmomentverringerung bzw. der nachfolgenden Antriebsdrehmomentanhebung in Abhängigkeit von dem jeweils ermittelten in Radumfangsrichtung wirksamen Kraftschlußbeiwert (µ_{U}) verändert wird.

12. Regeleinrichtung nach Anspruch 11,
dadurch gekennzeichnet, daß die Geschwindigkeit der bei einem Regeleingriff erfolgenden Antriebsdrehmomentverringerung bzw. -anhebung in Abhängigkeit von dem jeweils ermittelten in Radumfangsrichtung wirksamen Kraftschlußbeiwert (µ_{U}) kontinuierlich verändert wird.

13. Regeleinrichtung nach Anspruch 12,
dadurch gekennzeichnet, daß die Geschwindigkeit der bei einem Regeleingriff erfolgenden Antriebsdrehmomentverringerung bzw. -anhebung proportional zum jeweils ermittelten in Radumfangsrichtung wirksamen Kraftschlußbeiwert (µ_{U}) verändert wird.

## Claims

1. A system for controlling the torque of the engine of a vehicle, in which the slip occurring on the drive wheels of the vehicle is measured, and if a slip threshold is exceeded, the engine torque is reduced by a signal recording the amount of slip of a drive vehicle, and the respective adhesion coefficient (µ_{U}) operative in the peripheral direction of the wheel is obtained as a measure of the state of the road and the critical slip threshold for the drive wheels (14, 16) is altered in dependence on the respective measured adhesion coefficient (µ_{U}) operative in the wheel peripheral direction, characterised in that the respective adhesion stress (u), i.e. the wheel peripheral force (U) transmitted to the respective wheel load (G) relative to a drive wheel (14 or 16) on the road, is determined as a function of the measured wheel slip (s), i.e. the respective adhesion-stress and wheel-slip characteristic (66, 68 and 70), and the respective wheel peripheral force (U) required for determining the respective adhesion stress (u) is calculated on the basis of the torque of the engine (28), the gear ratio, the number of drive wheels (14, 16) and the radius thereof, and the maximum of the adhesion stress and wheel slip characteristic (66, 68 or 70) is at least approximately determined in order to calculate the respective adhesion coefficient (µ_{U}) operative in the wheel peripheral direction.

2. A system according to claim 1, characterised in that the adhesion stress and wheel slip characteristic (66, 68 or 70) is determined in each case for the drive wheel (14 or 16) at which the greatest slip (s) occurs.

3. A system according to claim 1 or 2, characterised in that the at least approximate determination of the maximum of the respective adhesion stress and wheel slip characteristic (66, 68 or 70) is made by determining a characteristic decrease in the gradient of the curve.

4. A system according to claim 3, characterised in that the torque of the engine (28) is determined on the basis of the position of the power regulator, e.g. the throttle valve (52) and the speed (n) of the engine (28).

5. A system according to claim 4, characterised in that the torque of the engine (28) is determined by access to a stored family of curves giving the torque of the engine (28) in dependence on the position of the power regulator (52) and the speed (n) of the engine (28).

6. A system according to any of the preceding claims, characterised in that the wheel slip (s) is determined by comparing the speed of the drive wheel (14 or 16) with the speed of the non-driven wheel (10 or 12) on one side of the vehicle.

7. A system according to claim 6, characterised in that the wheel slip (s) is determined by subtracting the speed (n_{VL} or n_{VR}) of the non-driven wheel (10 or 12) from the speed (n_{HL} or n_{HR}) of the drive wheel (14 or 16) and by subsequently dividing the result of subtraction by the speed (n_{VL} or n_{VR}) of the non-driven wheel (10 or 12).

8. A system according to any of the preceding claims, characterised in that the wheel slip (s) is determined by subtracting the speed of the vehicle from the peripheral speed of a drive wheel (14 or 16) and by subsequently dividing the result of subtraction by the speed of the vehicle.

9. A system according to any of the preceding claims, characterised in that the slip threshold is continuously altered in dependence on the respective determined adhesion coefficient (µ_{U}) operative in the wheel peripheral direction.

10. A system according to claim 9, characterised in that the slip threshold is altered in proportion to the respective determined adhesion coefficient (µ_{U}) operative in the wheel peripheral direction.

11. A system according to any of the preceding claims, characterised in that the rate of reduction in torque resulting from intervention in the system or the subsequent increase in torque in dependence on the respective determined adhesion coefficient (µ_{U}) operative in the wheel peripheral direction is altered.

12. A system according to claim 11, characterised in that the rate of reduction or increase in torque resulting from intervention in the system is continuously altered in dependence on the respective determined adhesion coefficient (µ_{U}) operative in the wheel peripheral direction.

13. A system according to claim 12, characterised in that the rate of reduction or increase in torque resulting from intervention in the system is altered in proportion to the respective determined adhesion coefficient (µ_{U}) operative in the wheel peripheral direction.

## Revendications

1. Dispositif de régulation pour réguler le couple moteur du moteur à combustion interne d'un véhicule automobile dans lequel on capte l'importance du patinage survenant sur les roues motrices du véhicule automobile, dans lequel lors du dépassement d'un seuil de patinage, on diminue le couple moteur du moteur à combustion interne grâce à un signal de patinage qui donne la valeur du patinage au niveau d'une roue motrice, dans lequel on détermine chaque fois le coefficient réel d'adhérence (µ_{U}) en sens périphérique de la roue comme mesure de la qualité de la route et dans lequel on modifie le seuil de patinage caractéristique des roues motrices (14, 16) en fonction du coefficient d'adhérence réel (µ_{U}) déterminé chaque fois dans le sens périphérique de la roue, dispositif caractérisé en ce que chaque contrainte d'adhérence (u), c'est-à-dire la force périphérique (U) de la roue transmise à la route par une roue motrice (14 ou 16) rapportée à la charge réelle (G) en fonction du patinage capté (s), c'est-à-dire qu'on détermine chaque fois la caractéristique contrainte d'adhérence - patinage (66, 68 et 70), en calculant la force périphérique (U) de la roue correspondante nécessaire à la détermination de chaque contrainte d'adhérence (u) en fonction du couple moteur du moteur à combustion interne (28), du rapport de boîte de vitesse, du nombre de roues motrices (14, 16) et de leur rayon, et que pour déterminer chaque coefficient d'adhérence réel en sens périphérique de la roue (µ_{U}) on détermine au moins, de manière approchée, le maximum de cette caractéristique contrainte d'adhérence - patinage (66, 68 ou 70).

2. Dispositif de régulation selon la revendication 1, caractérisé en ce que la caractéristique contrainte d'adhérence - patinage (66, 68 ou 70) est déterminée chaque fois pour la roue motrice (14 ou 16) qui a le plus grand patinage (s).

3. Dispositif de régulation selon la revendication 1 ou 2, caractérisé en ce qu'on réalise une détermination au moins approchée du maximum de chaque caractéristique contrainte d'adhérence - patinage (66, 68 ou 70) par mise en évidence d'une diminution caractéristique de la pente de la caractéristique.

4. Dispositif de réglage selon la revendication 3, caractérisé en ce que le couple moteur du moteur à combustion interne (28) est déterminé en fonction de la position de l'organe de réglage de puissance, par exemple le clapet d'étranglement (52) et de la vitesse de rotation (n) du moteur à combustion interne (28).

5. Dispositif de réglage selon la revendication 4, caractérisé en ce que le couple moteur du moteur à combustion interne (28) est déterminé par rappel en mémoire d'un champ de courbes caractéristiques donnant le couple moteur du moteur à combustion interne (28) en fonction de la position de l'organe de réglage de puissance (52) et de la vitesse de rotation (n) du moteur à combustion interne (28).

6. Dispositif de régulation selon l'une des revendications précédentes, caractérisé en ce qu'on détecte le patinage (s) par comparaison de la vitesse de rotation de la roue motrice (14 ou 16) à la vitesse de rotation de la roue non entraînée (10 ou 12) d'un côté d'un véhicule.

7. Dispositif de régulation selon la revendication 6, caractérisé en ce qu'on obtient le patinage (s) par soustraction de la vitesse de rotation (n_{VL} ou n_{VR}) de la roue non motrice (10 ou 12) de la vitesse de rotation (n_{HL} ou n_{HR}) de la roue motrice (14 ou 16) et ensuite par division du résultat de la soustraction par la vitesse de rotation (n_{VL} ou n_{VR}) de la roue non motrice (10 ou 12).

8. Dispositif de régulation selon l'une des revendications précédentes, caractérisé en ce qu'on détermine le patinage (s) par soustraction de la vitesse du véhicule de la vitesse périphérique d'une roue motrice (14 ou 16) et ensuite en divisant le résultat de la soustraction par la vitesse du véhicule automobile.

9. Dispositif de régulation selon l'une des revendications précédentes, caractérisé en ce qu'on modifie en continu le seuil de patinage en fonction du coefficient effectif d'adhérence (µ_{U}) déterminé à chaque fois dans le sens périphérique de la roue.

10. Dispositif de régulation selon la revendication 9, caractérisé en ce qu'on modifie le seuil de patinage proportionnellement au coefficient d'adhérence effectif (µ_{U}) déterminé chaque fois dans le sens périphérique de la roue.

11. Dispositif de réglage selon l'une des revendications précédentes, caractérisé en ce qu'on modifie la vitesse de la diminution de couple moteur consécutive à une commande de régulation ou de l'augmentation consécutive de couple moteur en fonction de chaque coefficient d'adhérence effectif (µ_{U}) déterminé chaque fois en sens périphérique de la roue.

12. Dispositif de régulation selon la revendication 11, caractérisé en ce qu'on modifie en continu la vitesse de la diminution ou de l'augmentation de couple moteur consécutive à une commande de régulation en fonction de chaque coefficient d'adhérence effectif (µ_{U}) déterminé en sens périphérique de la roue.

13. Dispositif de régulation selon la revendication 12, caractérisé en ce qu'on modifie la vitesse de diminution ou d'augmentation de couple moteur consécutive à une commande de régulation proportionnellement au coefficient d'adhérence effectif (µ_{U}) déterminé chaque fois en sens périphérique de la roue.
